# EUROPÄISCHE PATENTSCHRIFT

(11) **EP 1 718 934 B1**
(45) Veröffentlichungstag und Bekanntmachung des Hinweises auf die Patenterteilung: **30.05.2012**
(21) Anmeldenummer: 04804994.4
(22) Anmeldetag: 22.12.2004
(51) Int. Cl.: G01D 5/165, G01D 5/251

(54) **MAGNETISCH PASSIVER POSITIONS-SENSOR**
PASSIVE MAGNETIC POSITION SENSOR
CAPTEUR DE POSITION MAGNETIQUE PASSIF

(30) Priorität: 27.01.2004 DE 102004004102
(43) Veröffentlichungstag der Anmeldung: 08.11.2006
(73) Patentinhaber: Continental Automotive GmbH, 30165 Hannover (DE)
(72) Erfinder: PAUER, Bernd, 65817 Eppstein (DE)
(86) Internationale Anmeldenummer: PCT/EP2004/053661
(87) Internationale Veröffentlichungsnummer: WO 2005/071360

(56) Entgegenhaltungen:
- DE-A1- 19 648 539
- US-A- 4 014 741

## Beschreibung

Die Erfindung betrifft einen magnetisch passiven Positions-Sensor mit einem bewegbaren Magneten, mit einer Vielzahl von im Bewegungsbereich des Magneten angeordneten Kontaktfederelementen, wobei die Kontaktfederelemente einer Widerstandseinrichtung gegenüberstehen und von dem Magneten gegen die Widerstandseinrichtung bewegbar sind, und wobei die Widerstandseinrichtung mehrere einzelne, elektrische, den Kontaktfederelementen gegenüberstehende Kontakte hat.

Ein solcher Positions-Sensor wird bei Füllstandssensoren in Kraftstoffbehältern heutiger Kraftfahrzeuge häufig eingesetzt und ist beispielsweise aus der DE 196 48 539 A1 bekannt. Der Positions-Sensor erzeugt in Abhängigkeit von der Stellung des Magneten elektrische Signale. Die Kontaktfederelemente sind als eine Reihe elektrisch miteinander verbundener, federelastischer Zungen ausgebildet. Jeweils eine der Zungen steht einem der Kontakte der Widerstandseinrichtung gegenüber. Wird der Magnet über die Widerstandseinrichtung bewegt, gelangen die Kontaktfederelemente gegen die Kontakte der Widerstandseinrichtung. Nachteilig bei dem bekannten Positions-Sensor ist, dass eine Verschmutzung der Kontakte oder der Kontaktfederelemente eine elektrische Verbindung verhindert. In diesem Fall vermag der Positionssensor keine elektrischen Signale zu erzeugen. Daher werden meist mehrere, beispielsweise drei Kontaktfederelemente gegen drei einander benachbarte Kontakte bewegt. Jedoch führt auch hier der Ausfall eines der Kontaktfederelemente zu einer Verfälschung der elektrischen Signale des Positions-Sensors.

Der Erfindung liegt das Problem zugrunde, einen Positions-Sensor der eingangs genannten Art so zu gestalten, dass eine Verringerung der Genauigkeit der Signale in Abhängigkeit von der Stellung des Magneten durch einzelne Schmutzpartikel weitgehend vermieden wird.

Dieses Problem wird erfindungsgemäß dadurch gelöst, dass einem einzelnen Kontakt der Widerstandseinrichtung zumindest zwei Zungen der Kontaktfederelemente zugeordnet sind.

Durch diese Gestaltung wird bei einem auf dem Kontakt haftenden Schmutzpartikel nur die elektrische Verbindung einer der Zungen mit dem Kontakt verhindert. Die zweite Zunge kann die Verbindung mit dem Kontakt herstellen. Dieser Kontakt vermag daher Signale des Positionssensors zu erzeugen. Damit erzeugt die Anzahl der einem einzelnen Kontakt zugeordneten Zungen eine Redundanz. Daher führen einzelne Schmutzpartikel nicht zu einer Verringerung der Genauigkeit des erfindungsgemäßen Positions-Sensors.

Der erfindungsgemäße Positions-Sensor gestaltet sich konstruktiv besonders einfach, wenn die Zungen jeweils als einzelnes Kontaktfederelement ausgebildet sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: eine Schnittdarstellung durch einen erfindungsgemäßen Positions-Sensor,
- Figur 2: eine Schnittdarstellung durch den erfindungsgemäßen Positions-Sensor aus Figur 1 entlang der Linie II - II.

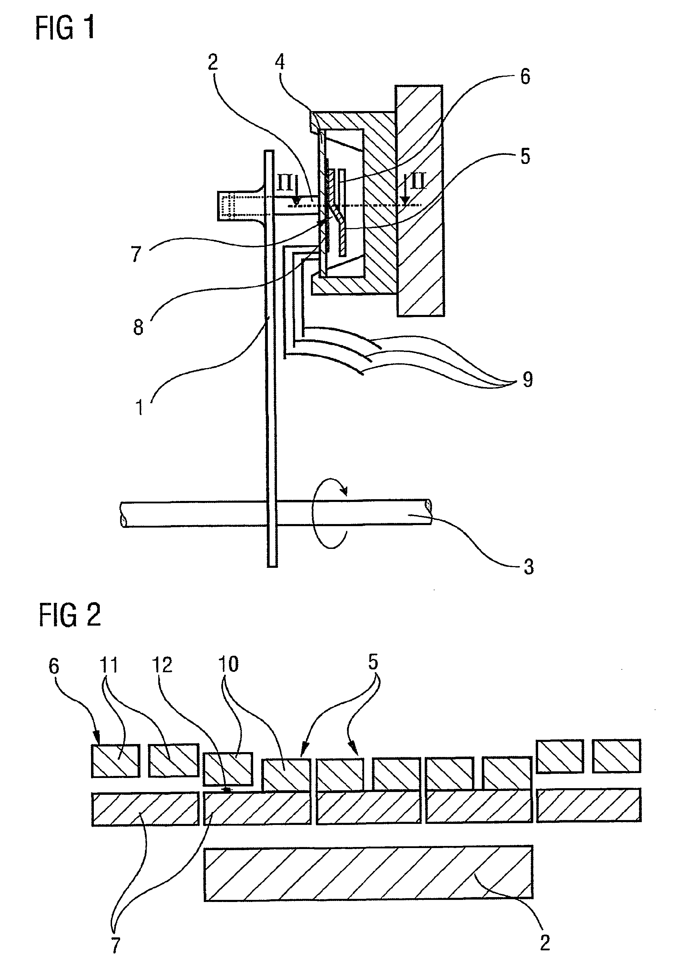

Figur 1 zeigt einen Positions-Sensor mit einem auf einem Schwenkarm 1 angeordneten Magneten 2. Der Schwenkarm 1 ist auf einer Drehachse 3 befestigt. Die Drehachse 3 lässt sich beispielsweise mit einem nicht dargestellten Schwimmer eines Füllstandssensors eines Kraftstoffbehälters verbinden. Über die Drehachse 3 wird der Magnet 2 über eine Widerstandseinrichtung 4 verschwenkt. Auf der dem Magneten 2 abgewandten Seite der Widerstandseinrichtung 4 sind magnetische Kontaktfederelemente 5, 6 angeordnet. Die Kontaktfederelemente 5, 6 lassen sich von dem Magneten 2 anziehen und gegen die Widerstandseinrichtung 4 drücken. Die Widerstandseinrichtung 4 hat mehrere, den Kontaktfederelementen 5, 6 gegenüberstehende Kontakte 7. Die Kontakte 7 sind über eine Widerstandsbahn 8 miteinander verbunden. Alternativ dazu könnten die Kontakte auch auf einem Dickschichtnetzwerk angeordnet sein. Die Widerstandseinrichtung 4 ist über elektrische Leitungen 9 mit einer nicht dargestellten Elektronik verbunden, welche über die an der Widerstandseinrichtung 4 anliegenden Kontaktfederelemente 5, 6 die Stellung des Magneten 2 erfasst. Dieser Positions-Sensor ist in der DE 196 48 539 A1 ausführlich beschrieben, weshalb zur Offenbarung des Aufbaus und der Funktion ausdrücklich auf diese Schrift verwiesen wird.

Figur 2 zeigt eine Schnittdarstellung durch den Positions-Sensor aus Figur 1, wobei die Kontaktfederelemente jeweils zwei einem einzelnen Kontakt gegenüberstehende Zungen 10, 11 aufweisen. Der Magnet 2 kontaktiert insgesamt drei Kontakte 7 mit den Kontaktfederelementen 5. An einem der Kontakte 7 ist beispielhaft eine Verschmutzung 12 dargestellt, welche eine Kontaktierung mit einer der Zungen 10 des Kontaktfederelementes 5 verhindert. Der Kontakt 7 wird von der zweiten Zunge 10 des diesem Kontakt 7 gegenüberstehenden Kontaktfederelementes 5 kontaktiert.

## Patentansprüche

1. Magnetisch passiver Positions-Sensor mit einem bewegbaren Magneten (8), mit einer Vielzahl von im Bewegungsbereich des Magneten angeordneten Kontaktfederelementen (5,6) wobei die Kontaktfederelemente (5,6) einer Widerstandseinrichtung (4) gegenüberstehen von dem Magneten (2) gegen die Wider-standseinrichtung (4) bewegbar sind, und wobei die Widerstandseinrichtung (4) mehrere einzelne, elektrische, den Kontaktfederelementen (5,6) gegenüberstehenden Kontakte (7) hat, **dadurch gekennzeichnet , dass** jedem einzelnen Kontakt (7) der Widerstandseinrichtung (4) zumindest zwei Zungen (10, 11) der Kontaktfederelemente (5, 6) zugeordnet sind.

2. Magnetisch passiver Positions-Sensor nach Anspruch 1, **dadurch gekennzeichnet , dass** die Zungen (10, 11) jeweils als einzelnes Kontaktfederelement (5, 6) ausgebildet sind.

## Claims

1. Magnetically passive position sensor with a movable magnet (8), with a multiplicity of contact spring elements (5, 6) arranged in the range of movement of the magnet, the contact spring elements (5, 6) lying opposite a resistance device (4) and being able to be moved by the magnet (2) against the resistance device (4), and the resistance device (4) having a number of individual electrical contacts (7), lying opposite the contact spring elements (5, 6), **characterized in that** each individual contact (7) of the resistance device (4) is assigned at least two tongues (10, 11) of the contact spring elements (5, 6).

2. Magnetically passive position sensor according to Claim 1, **characterized in that** the tongues (10, 11) are each formed as an individual contact spring element (5, 6).

## Revendications

1. Capteur de position passif du point de vue magnétique, comprenant un aimant (8) mobile, une pluralité d'éléments (5, 6) de ressort de contact disposés dans la zone de déplacement de l'aimant, les éléments (5, 6) de ressort de contact étant opposés à un dispositif (4) de résistance et pouvant être déplacés par l'aimant (8) vers le dispositif (4) de résistance, et dans lequel le dispositif (4) de résistance a plusieurs contacts (7) individuels électriques opposés aux éléments (5, 6) à ressort de contact, **caractérisé en ce qu'**à chaque contact (7) individuel du dispositif (4) de résistance sont associées au moins deux languettes (10, 11) des éléments (5, 6) à ressort de contact.

2. Capteur de position passif du point de vue magnétique suivant la revendication 1, **caractérisé en ce que** les languettes (10, 11) sont constituées respectivement en éléments (5, 6) individuels de ressort de contact.
